# EUROPEAN PATENT APPLICATION

(11) **EP 4 570 411 A1**
(43) Date of publication of application: **18.06.2025**
(21) Application number: 24218850.6
(22) Date of filing: 10.12.2024
(51) Int. Cl.: B23K 9/095, B23K 9/10, B23K 9/32, B23K 37/00, H04W 4/029

(54) **WELD MONITORING SYSTEMS WITH TOOL AND OPERATOR POSITION TRACKING**

(30) Priority: 14.12.2023 US 202363610053 P; 22.11.2024 US 202418956988
(71) Applicant: Illinois Tool Works Inc., Glenview IL 60025 (US)
(72) Inventor: ROMANO, Vincent Nicholas, Glenview, 60025 (US); MCELLIS, Todd Michael, Glenview, 60025 (US); FALDE, Leland Daryl, Glenview, 60025 (US); IVKOVICH, Stephen P., Glenview, 60025 (US)
(74) Representative: HGF

(57) **Abstract**

In some examples, weld monitoring systems may automatically identify a job, part, and/or activity in which an operator and/or tool is involved based on a tracked position and/or orientation of the operator and/or tool. The monitoring and/or recording of job, part, and/or activity information for each operator and/or tool may facilitate productivity, quality assurance, and/or maintenance analysis, as well as future planning. The automatic identification of the job, part, and/or activity in which the operator and/or tool is involved also ensures that that the weld monitoring system can still monitor effectively even if operators neglect to provide input regarding their activities.

## Description

### CROSS REFERENCE TO RELATED APPLICATIONS

This application claims priority to, and the benefit of, U.S. Provisional Patent Application No. 63/610,053, entitled "Weld Monitoring Systems with Tool and Operator Position Tracking, dated December 14, 2023, the entire contents of which being hereby incorporated by reference.

### TECHNICAL FIELD

The present disclosure generally relates to weld monitoring systems and, more particularly, to weld monitoring systems with tool and operator position tracking.

### BACKGROUND

Weld monitoring systems monitor data pertaining to welding operations and related activities. In order to monitor the welding operations, some weld monitoring systems rely upon welding operators to provide input about the welding operations. Unfortunately, operators often become preoccupied or forgetful, and neglect to describe what is happening. Lack of operator input can result in ineffective monitoring.

Limitations and disadvantages of conventional and traditional approaches will become apparent to one of skill in the art, through comparison of such systems with the present disclosure as set forth in the remainder of the present application with reference to the drawings.

### BRIEF SUMMARY

The present disclosure is directed to weld monitoring systems with tool and operator position tracking, substantially as illustrated by and/or described in connection with at least one of the figures, and as set forth more completely in the claims.

These and other advantages, aspects and novel features of the present disclosure, as well as details of an illustrated example thereof, will be more fully understood from the following description and drawings.

### BRIEF DESCRIPTION OF THE DRAWINGS

FIG. 1 shows an example of a weld monitoring system configured to track a position and/or orientation of an operator and/or welding-type tool in a welding area, in accordance with aspects of this disclosure.
FIG. 2a is a block diagram of the example weld monitoring system of FIG. 1, in accordance with aspects of this disclosure.
FIG. 2b is a diagram illustrating an example database that may be used in or with the weld monitoring system of FIG. 2a, in accordance with aspects of this disclosure.
FIG. 3 is a flow chart illustrating an example monitoring process of the weld monitoring system of FIG. 2a, in accordance with aspects of this disclosure.
FIG. 4 shows an example of a facility having several welding and non-welding areas, in and around which the weld monitoring system of FIGS. 1-2a may track a position and/or orientation of an operator and/or welding-type tool, in accordance with aspects of this disclosure.

The figures are not necessarily to scale. Where appropriate, the same or similar reference numerals are used in the figures to refer to similar or identical elements.

### DETAILED DESCRIPTION

Some examples of the present disclosure relate to weld monitoring systems that automatically identify a job, part, and/or activity in which an operator and/or tool is involved based on a tracked position and/or orientation of the operator and/or tool. The monitoring and/or recording of job, part, and/or activity information for each operator and/or tool may facilitate productivity, quality assurance, and/or maintenance analysis, as well as future planning. The automatic identification of the job, part, and/or activity in which the operator and/or tool is involved also ensures that that the weld monitoring system can still monitor effectively even if operators neglect to provide input regarding their activities.

Some examples of the present disclosure relate to a welding system, comprising: a tracking system configured to track one or more of a tool position of a welding-type tool or an operator position of a welding operator handling the welding-type tool; memory circuitry configured to store: a plurality of welding job identifiers, or a plurality of part identifiers, a plurality of stored positions, and an association between each welding job identifier of the plurality of welding job identifiers, or each part identifier of the plurality of part identifiers, and a stored position of the plurality of stored positions; and processing circuitry configured to: determine whether the tool position or the operator position is proximate a particular position of the plurality of positions, in response to determining the tool position or the operator position is proximate the particular stored position, identify a particular welding job identifier from the plurality of welding job identifiers, or a particular part identifier from the plurality of part identifiers, that is associated with the stored position, and associate, in memory circuitry, the particular welding job identifier, or the particular part identifier, with an operator identifier of the operator or a tool identifier of the welding-type tool.

In some examples, the association comprises a position association, the memory circuitry being further configured to store a part-job association between each part identifier of the plurality of part identifiers and at least one welding job identifier of the plurality of the welding job identifiers. In some examples, the processing circuitry is configured to determine whether the tool position or the operator position is proximate the particular position by determining whether the tool position or the operator position is within a threshold distance of the particular position, or determining whether the tool position or the operator position is closer to the particular position than any other position of the plurality of positions. In some examples, the tracking system is configured to track the operator by tracking a mobile device of the operator or a piece of wearable apparel worn by the operator, the piece of wearable apparel comprising a bracelet, an armband, a wristband, footwear, legwear, headwear, a glove, a shirt, a vest, a welding helmet, an earbud, or a badge.

In some examples, the tracking system comprises one or more camera, optical, magnetic, ultrasonic, acoustic, global positioning system (GPS), radio frequency identification (RFID), near field communication (NFC), or Bluetooth sensors. In some examples, at least one welding job identifier of the plurality of welding job identifiers, or at least one part identifier of the plurality of part identifiers, is associated with two or more stored positions of the plurality of stored positions. In some examples, the association comprises a job-position or a part-position association, the memory circuitry being further configured to store: a plurality of operator activity identifiers, and an activity-position association between each stored position of the plurality of stored positions and an operator activity identifier of the plurality of operator activity identifiers, the processing circuitry being further configured to in response to determining the tool position or the operator position is proximate the particular stored position, identify, from the plurality of operator activity identifiers, a particular operator activity identifier associated with the particular stored position, and associate together, in the memory circuitry, the operator activity identifier and the operator identifier of the operator or the tool identifier of the welding-type tool.

Some examples of the present disclosure relate to a welding system, comprising: a tracking system configured to track a tool position of a welding-type tool or an operator position of a welding operator; memory circuitry configured to store: a plurality of stored positions within a facility, a plurality of operator activity identifiers, and an association between each stored position of the plurality of stored positions and an operator activity identifier of the plurality of operator activity identifiers; and processing circuitry configured to: determine whether the tool position or the operator position is proximate a particular stored position of the plurality of stored positions, in response to determining the tool position or the operator position is proximate the particular stored position, identify, from the plurality of operator activity identifiers, a particular operator activity identifier associated with the particular stored position, and associate together, in the memory circuitry, the operator activity identifier and the operator identifier of the operator or the tool identifier of the welding-type tool.

In some examples, at least one operator activity identifier of the plurality of operator activity identifiers is associated with two or more stored positions of the plurality of stored positions. In some examples, the welding-type tool comprises a welding tool, a cladding tool, a brazing tool, a plasma cutting tool, an induction heating tool, carbon arc cutting tool, a gouging tool, or a preheating tool. In some examples, the tracking system is configured to track the operator by tracking a mobile device of the operator or a piece of wearable apparel worn by the operator.

In some examples, the piece of wearable apparel comprises a bracelet, an armband, a wristband, footwear, legwear, headwear, a glove, a shirt, a vest, a welding helmet, an earbud, or a badge. In some examples, the tracking system comprises one or more camera, optical, magnetic, ultrasonic, acoustic, global positioning system (GPS), radio frequency identification (RFID), near field communication (NFC), or Bluetooth sensors. In some examples, the association comprises an activity-position association, the memory circuitry being further configured to store: a plurality of welding job identifiers, or a plurality of part identifiers, and a job-position association between each welding job identifier of the plurality of welding job identifiers, or a part-position association between each part identifier of the plurality of part identifiers, and a stored position of the plurality of stored positions, the processing circuitry being further configured to in response to determining the tool position or the operator position is proximate the particular stored position, identify a particular job identifier from the plurality of welding job identifiers, or a particular part identifier from the plurality of part identifiers, that is associated with the particular stored position, and associate together, in the memory circuitry, the particular job identifier, or the particular part identifier, and an operator identifier of the operator or a tool identifier of the welding-type tool.

Some examples of the present disclosure relate to a weld monitoring method, comprising: tracking, via a tracking system, one or more of a tool position of a welding-type tool or an operator position of a welding operator handling the welding-type tool; storing, in memory circuitry: a plurality of welding job identifiers, or a plurality of part identifiers, a plurality of stored positions, and an association between each welding job identifier of the plurality of welding job identifiers, or each part identifier of the plurality of part identifiers, and a stored position of the plurality of stored positions; determining, via processing circuitry, whether the tool position or the operator position is proximate a particular position of the plurality of positions; in response to determining the tool position or the operator position is proximate the particular stored position, identifying, via the processing circuitry, a particular welding job identifier from the plurality of welding job identifiers, or a particular part identifier from the plurality of part identifiers, that is associated with the stored position; and associating, in the memory circuitry, the particular welding job identifier, or the particular part identifier, with an operator identifier of the operator or a tool identifier of the welding-type tool

In some examples, the association comprises a position association, the method further comprising storing in the memory circuitry a part-job association between each welding job identifier of the plurality of the welding job identifiers and at least one part identifier of the plurality of part identifiers. In some examples, tracking the operator position comprises tracking the operator by tracking a mobile device of the operator or a piece of wearable apparel worn by the operator. In some examples, the piece of wearable apparel comprises a bracelet, an armband, a wristband, footwear, legwear, headwear, a glove, a shirt, a vest, a welding helmet, an earbud, or a badge.

In some examples, the tracking system comprises one or more camera, optical, magnetic, ultrasonic, acoustic, global positioning system (GPS), radio frequency identification (RFID), near field communication (NFC), or Bluetooth sensors. In some examples, the association comprises a job-position or a part-position association, the method further comprising: storing, in the memory circuitry: a plurality of operator activity identifiers, and an activity-position association between each stored position of the plurality of stored positions and an operator activity identifier of the plurality of operator activity identifiers; in response to determining the tool position or the operator position is proximate the particular stored position, identifying via processing circuitry, from the plurality of operator activity identifiers, a particular operator activity identifier associated with the particular stored position; and associating together, in the memory circuitry, the operator activity identifier and the operator identifier of the operator or the tool identifier of the welding-type tool.

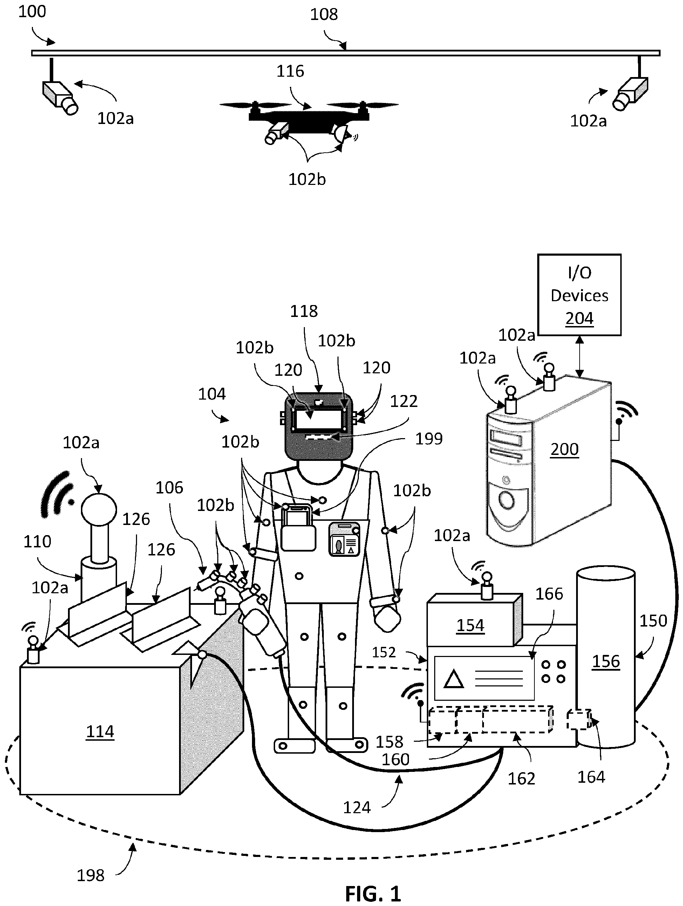

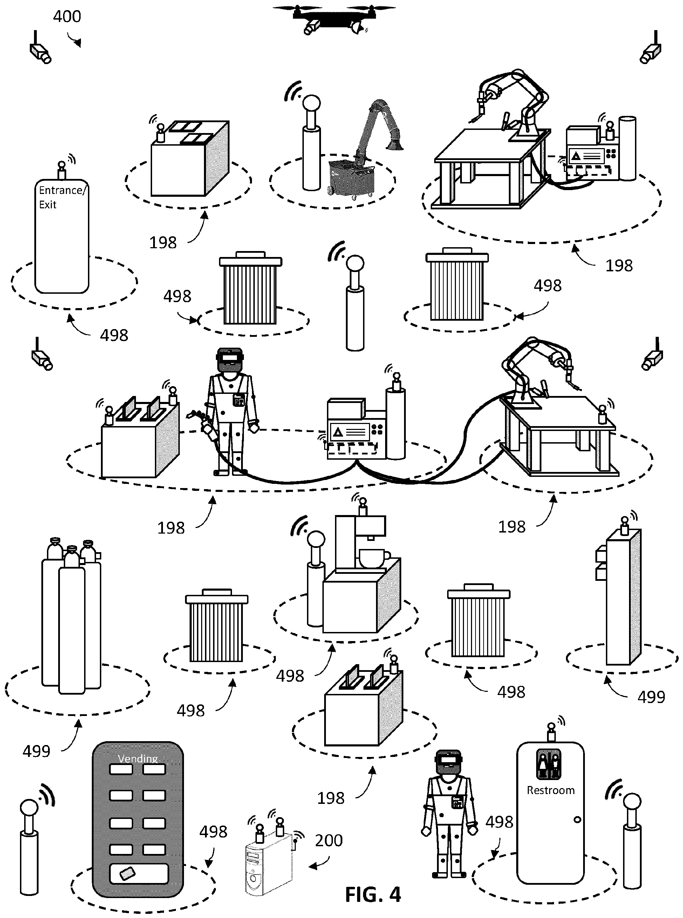

FIG. 1 shows an example of a weld monitoring system 100. As shown, the weld monitoring system 100 includes a computing system 200 and several position tracking sensors 102. In some examples, the weld monitoring system 100 may use the computing system 200 and/or tracking sensors 102 to monitor the activities of an operator 104 and/or welding-type tool 106 (e.g., a welding torch/gun) within a welding area/cell 198. In some examples, the weld monitoring system 100 may further monitor the activities of the operator 104 and/or welding-type tool 106 outside of the welding area 198, in other welding areas 198, in welding-related areas 499, and/or in non-welding areas 498 (see, e.g., FIG. 4).

In some examples, the weld monitoring system 100 may use a variety of tracking sensors 102 to track the position and/or orientation of the operator 104 and/or welding-type tool 106. For example, some of the tracking sensors 102 shown in FIG. 1 are fixed sensors 102a that are shown attached to a fixture 108, such as, for example, a fixture 108 (e.g., ceiling, floor, pillar, wall, door, railing, etc.) of a building or facility 400 (see, e.g., FIG. 4). Some of the fixed sensors 102a are shown affixed to and/or integrated with a stanchion 110 that may be attached to a fixture 108 and/or weighted such that the stanchion 110 is substantially difficult to lift and/or move by hand. Some of the fixed sensors 102a are shown as affixed to welding equipment 150 and/or a welding bench 114. While shown as being attached to the welding equipment 150 and/or welding bench 114, in some examples, one or more of the fixed sensors 102a may instead be integrated into the welding equipment 150 and/or welding bench 114.

Some of the tracking sensors 102 shown in FIG. 1 are mobile tracking sensors 102b. For example, mobile tracking sensors 102b are shown attached to an unmanned aerial vehicle (UAV) 116, the operator 104 held welding-type tool 106, a mobile device 199 of the operator 104, an operator 104 worn welding helmet 118, and other operator 104 worn apparel (e.g., pants, shirt, vest, boots, gloves, badge, etc.). While the operator 104 is shown wearing a welding helmet 118 in the example of FIG. 1, in some examples, the operator 104 may alternatively, or additionally, wear (and/or the mobile sensors 102b may alternatively, or additionally, be attached to) some other headwear (e.g., goggles, face shield, headphones, earbuds, etc.).

In some examples, one or more of the tracking sensors 102 may comprise camera, optical, magnetic, ultrasonic, acoustic, global positioning system (GPS), radio frequency identification (RFID), near field communication (NFC), and/or Bluetooth sensors. In some examples, the tracking sensors 102 are configured to capture sensor data that allows the computing system 200 to identify, monitor, and/or track the positions and/or orientations of the operator 104 and/or the welding-type tool 106. In some examples, one or more of the (e.g., mobile) sensors 102 may comprises active or passive markers that may be detected, recognized, and/or tracked by the other sensors 102 and/or the computing system 200 (e.g., via analysis of the sensor data).

In some examples, one or more of the tracking sensors 102 may include communication circuitry (and/or antennae) enabling the tracking sensors 102 to communicate sensor data captured and/or detected by the tracking sensors 102 to the computing system 200 (and/or other tacking sensors 102). In some examples, one or more of the tracking sensors 102 may be used to route, repeat, and/or amplify a communication signal sent by another tracking sensor 102 (e.g., to ensure the communication signal reaches the computing system 200).

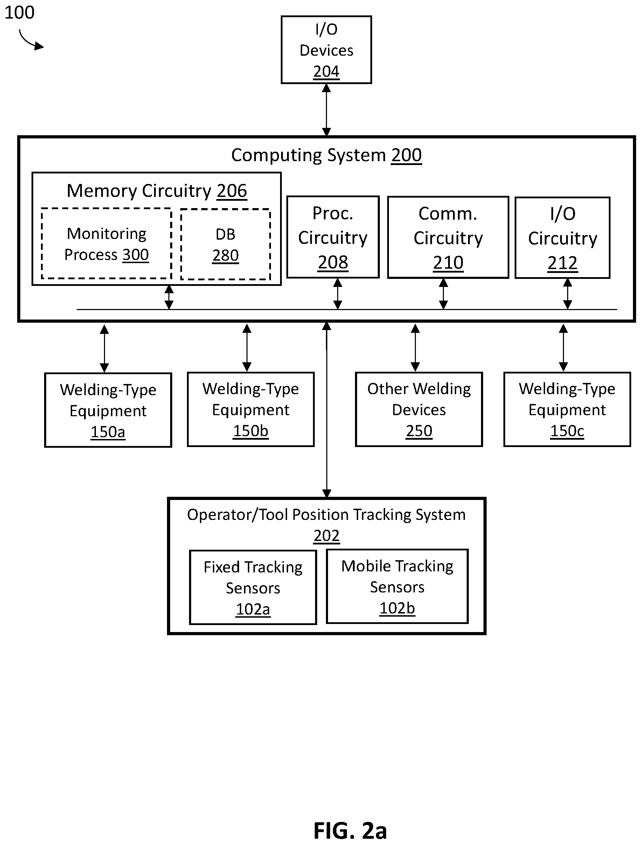

In the example of FIG. 1, the computing system 200 is shown as having its own fixed tracking sensors 102a. In some examples, one or more of the tracking sensors 102a may be integrated into (e.g., instead of attached to) the computing system 200. The computing system 200 is further shown as having an antenna for communicating with the tracking sensors 102a (and/or other tracking sensors 102), as well as other devices. In some examples, the antenna may be part of computing communication circuitry 210 of the computing system 200 (see, e.g., FIG. 2a).

In the example of FIG. 1, the computing system 200 is also shown as having, and/or being connected to, computing input/output (I/O) devices 204. In some examples, the computing I/O devices 204 may include one or more computer mice, keyboards, (e.g., touch) display screens, speakers, microphones, haptic devices, lights, buttons, knobs, and/or other devices. In some examples, the tracking sensors 102 of the computing system 200 may be considered computing I/O devices 204.

In some examples, one or more helmet I/O devices 120 of the welding helmet 118 may be used as computing I/O devices 204. In some such examples, helmet circuitry 122 of the welding helmet 118 may communicate with the computing system 200 to relay I/O signals. In some examples, the helmet circuitry 122 of the welding helmet 118 may be used to implement some or all of the computing system 200.

In the example of FIG. 1, the computing system 200 is shown with a wired connection to welding-type equipment 150 in the welding area/cell 198. In some examples, the computing system 200 may additionally, or alternatively, be in wireless communication with the welding-type equipment 150 (and/or other welding-type equipment 150). The welding-type equipment 150 is shown as being connected to the welding-type tool 106 via welding cable 124. In some examples, the welding-type equipment 150 may deliver welding-type electrical power and/or consumables (e.g., welding wire and/or shielding gas) to the welding-type tool 106 via the welding cable 124. While only one cable 124 is shown in the example of FIG.1 for the sake of simplicity and explanation, in some examples, the welding cable 124 may comprise a bundle of cables.

The welding-type equipment 150 is shown as including a welding-type power supply 152, a welding wire feeder 154, and a gas supply 156, coupled together. While shown as being a collection of connected but separate devices, in some examples, the welding-type equipment 150 may instead be integrated into fewer devices, and/or a single device (e.g., a combined welding-type power supply 152 and wire feeder 154).

In some examples, the wire feeder 154 houses a wire spool that is used to provide the welding-type tool 106 with a wire electrode (e.g., via the welding cable 124). In some examples, the wire feeder 154 further includes motorized rollers configured to feed the wire electrode to the tool 106 (e.g., from the spool) and/or retract the wire electrode from the tool 106 (e.g., back to the spool).

In some examples, the gas supply 156 supplies a shielding gas and/or shielding gas mixtures to the tool 106 (e.g., via welding cable 124). A shielding gas, as used herein, may refer to any gas (e.g., CO2, argon) or mixture of gases that may be provided to the tool 106 and/or welding-type operation in order to provide a particular local atmosphere (e.g., shield the arc, improve arc stability, limit the formation of metal oxides, improve wetting of the metal surfaces, alter the chemistry of the weld deposit, and so forth).

In some examples, the welding-type power supply 152 supplies welding-type power to the tool 106 (e.g., via the welding cable 124). In the example of FIG. 1, the welding-type power supply 152 is shown as including power communication circuitry 158, power control circuitry 160, power conversion circuitry 162, a gas valve 164, and an operator interface 166.

The operator interface 166 is shown as comprising one or more adjustable inputs (e.g., knobs, buttons, switches, keys, etc.) and/or outputs (e.g., display screens, lights, speakers, etc.). In some examples, the operator 104 may use the operator interface 166 to enter and/or select one or more welding parameters (e.g., output voltage, output current, output frequency, gas type, gas flow rate, wire feed speed, wire type, workpiece material type, welding-type process, etc.). While shown as being part of the power supply 152, in some examples, the operator interface 166 may instead be part of a different part of the welding-type equipment 150.

As mentioned above, the welding-type power supply 152 is shown as including power communication circuitry 158. In some examples, the power communication circuitry 158 may include one or more antennas, wireless adapters, wireless cards, cable adapters, wire adapters, dongles, radio frequency (RF) devices, wireless communication devices, Bluetooth devices, IEEE 802.11-compliant devices, WiFi devices, cellular devices, GPS devices, Ethernet ports, network ports, lightning cable ports, cable ports, etc. In some examples, the power communication circuitry 158 may be configured to facilitate communication via one or more wired media and/or protocols (e.g., Ethernet cable(s), universal serial bus cable(s), etc.) and/or wireless mediums and/or protocols (e.g., near field communication (NFC), ultra high frequency radio waves (commonly known as Bluetooth), IEEE 802.11x, Zigbee, HART, LTE, Z-Wave, WirelessHD, WiGig, etc.).

The welding-type power supply 152 is further shown as including power conversion circuitry 162. In some examples, the power conversion circuitry 162 is configured to receive input power (e.g., from mains power, a generator, etc.) and convert the input power to welding-type output power. In some examples, the power conversion circuitry 162 may include circuit elements (e.g., transformers, rectifiers, capacitors, inductors, diodes, transistors, switches, and so forth) capable of converting the input power to output power.

In some examples, the power conversion circuitry 162 may also include one or more controllable circuit elements. In some examples, the controllable circuit elements may comprise circuitry configured to change states (e.g., fire, turn on/off, close/open, etc.) based on one or more control signals. In some examples, the state(s) of the controllable circuit elements may impact the operation of the power conversion circuitry 162, and/or impact characteristics (e.g., current/voltage magnitude, frequency, waveform, etc.) of the output power provided by the power conversion circuitry 162. In some examples, the controllable circuit elements may comprise, for example, switches, relays, transistors, etc. In examples where the controllable circuit elements comprise transistors, the transistors may comprise any suitable transistors, such as, for example MOSFETs, JFETs, IGBTs, BJTs, etc.

As shown, the welding-type power supply 152 further includes control circuitry 160 electrically coupled to and/or configured to control the power conversion circuitry 162 and/or power communication circuitry 158. In some examples, the control circuitry 160 may include processing circuitry (and/or one or more processors) as well as analog and/or digital memory. In some examples, the control circuitry 160 is configured to control the power conversion circuitry 162, so as to ensure the power conversion circuitry 162 generates the appropriate welding-type output power for carrying out the desired welding-type operation. Though not shown for the sake of simplicity, in some examples, the control circuitry 160 may be further coupled to the operator interface 166, and/or configured to control the power conversion circuitry 162 according to inputs received via the operator interface 166.

In some examples, the control circuitry 160 is also electrically coupled to and/or configured to control the wire feeder 154, the gas supply 156, and/or a gas valve 164 (e.g., according to inputs received via the operator interface 166). In some examples, the control circuitry 160 may control the wire feeder 154 to output wire at a target speed and/or direction. For example, the control circuitry 160 may control the motor of the wire feeder 154 to feed the wire electrode to (and/or retract the wire electrode from) the tool 106 at a target speed. In some examples, the welding-type power supply 152 may control the gas supply 156 and/or gas valve 164 to output and/or allow for flow of a target type and/or amount gas.

In some examples, a welding-type operation (and/or welding process) may be initiated when the operator 104 activates (e.g., a trigger of) the welding-type tool 106. During the welding-type operation, the welding-type equipment may provide welding-type power and/or consumables to the welding-type tool 106 for the welding-type operation. The welding-type tool 106 may use the welding-type power and/or consumables to operate upon one or more workpieces 126.

When the welding operation is finished, the operator 104 may deactivate the welding-type tool 106 (e.g., by releasing the trigger). In some examples, the control circuitry 160 may detect activation and/or deactivation of the welding-type tool 106, and control the delivery and/or cessation of delivery of the welding-type power and/or consumables to the welding-type tool 106. In some examples, the control circuitry 160 may further control the power communication circuitry 158 to send one or more signals to the computing system 200 indicating when the welding-type tool 106 is activated and/or deactivated (and/or when the welding-type operation begins and/or ends).

FIG. 2a is a block diagram showing further details of the weld monitoring system 100 and, in particular, the components and/or connections of the computing system 200 of the weld monitoring system 100. In some examples, the computing system 200 may be implemented by way of a desktop computer, laptop computer, tablet computer, and/or a server computer. In the example of FIG. 2a, the computing system 200 is shown in communication with several different pieces of welding-type equipment 150, as well as other welding devices 250. In some examples, the other welding devices 250 may include the welding-type tool 106 (and/or other welding-type tools 106), the welding helmet 118 (and/or other welding helmets 118), one or more fume extractors, one or more welding robots, and/or other relevant devices.

In the example of FIG. 2a, the computing system 200 is further shown as being in communication with a tracking system 202. The tracking system 202 is shown as being comprised of the fixed tracking sensors 102a and mobile tracking sensors 102b. In some examples, the tracking system 202 may further include additional tracking sensors.

The computing system 200 is also shown as comprising computing memory circuitry 206, computing processing circuitry 208, computing communication circuitry 210, and computing I/O circuitry 212. As shown, the computing memory circuitry 206, computing processing circuitry 208, computing communication circuitry 210, and computing I/O circuitry 212 are interconnected with one another via a common electrical bus.

In some examples, the computing I/O circuitry 212 may comprise one or more drivers for the computing I/O devices 204. In some examples, the computing I/O circuitry 212 may be configured to generate one or more signals representative of input received via the computing I/O devices 204, and provide the signal(s) to the bus. In some examples, the computing I/O circuitry 212 may also be configured to computing I/O devices 204 to generate one or more outputs in response to one or more signals (e.g., received via the bus).

In some examples, the computing communication circuitry 210 may comprise one or more antennas, wireless adapters, wireless cards, cable adapters, wire adapters, dongles, radio frequency (RF) devices, wireless communication devices, Bluetooth devices, IEEE 802.11-compliant devices, WiFi devices, cellular devices, GPS devices, Ethernet ports, network ports, lightning cable ports, cable ports, etc. In some examples, the computing communication circuitry 210 may be configured to facilitate communication via one or more wired media and/or protocols (e.g., Ethernet cable(s), universal serial bus cable(s), etc.) and/or wireless mediums and/or protocols (e.g., near field communication (NFC), ultra high frequency radio waves (commonly known as Bluetooth), IEEE 802.11x, Zigbee, HART, LTE, Z-Wave, WirelessHD, WiGig, etc.).

In some examples, the computing processing circuitry 208 may comprise one or more processors. In some examples, the computing processing circuitry 208 may comprise one or more drivers for the tracking system 202. In some examples, the computing processing circuitry 208 may be configured to execute machine readable instructions stored in the computing memory circuitry 206.

In the example of FIG. 2a, the computing memory circuitry 206 includes (and/or stores) a database 280. In some examples, the database 280 may store data relating to, and/or representative of, welding jobs (and/or welding projects), parts manufactured through the welding jobs (e.g., via the joining of two or more workpieces 126), operators 104 who work on manufacturing the parts during the welding jobs, tools 106 used by the operators 104 to manufacture the parts during the welding jobs, other activities (and/or tasks) undertaken by the operators 104 and/or tools 106, and/or positions where the welding jobs and/or activities occur. In some examples, the database 280 may additionally store data relating to, and/or representative of, associations and/or relationships between the aforementioned data.

While shown as part of the computing memory circuitry 206 of the computing system 200 in FIG. 2a, in some examples, the database 280 may instead be separate from the computing memory circuitry 206, and/or separate from (yet in communication with) the computing system 200. While one database 280 is shown in the example of FIG. 2a for the sake of simplicity, in some examples, the weld monitoring system 100 may include several databases 280.

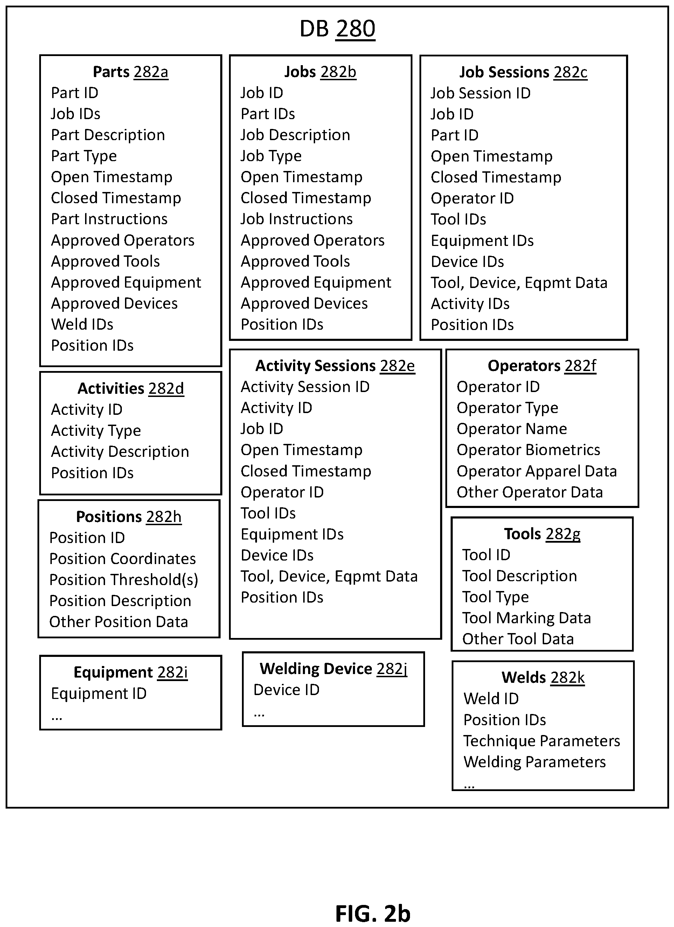

FIG. 2b shows an example design of the database 280. Though the database 280 is depicted as a relational database 280, in some examples, one or more other types of databases 280 may be used.

The database 280 is shown as organizing data in and/or according to a set of tables 282. In particular, the database 280 is shown as organizing data in and/or according to a Parts table 282a, a Jobs table 282b, a Job Sessions table 282c, an Activities table 282d, an Activity Sessions table 282e, an Operators table 282f, a Tools table 282g, a Positions table 282h, an Equipment table 282i, a Welding Device table 282j, and a Weld table 282k. In some examples, more or fewer tables 282 (and/or columns of the tables 282) may be used. While some example tables 282 are shown in the example of FIG. 2b as belonging to the database 280, in some examples, the tables 282 may be spread across several databases 280.

In some examples, related data in may be organized (and/or associated together) in a row of a particular table 282. Additionally, the data for a particular row of a table 282 may be organized according to the columns of the table 282. While each table 282 has its own distinct columns, all the tables 282 are shown as including at least an identifier column.

For example, the Parts table 282a includes a Part ID column, the Jobs table 282b includes a Job ID column, the Job Sessions table 282c includes a Job Session ID column, and so on and so forth. A unique (e.g., alphanumeric) identifier may be generated and/or stored in the ID column of a table 282 for each row of the table 282. In some examples, the identifier data in the ID column may be used to identify and/or reference the row of the table 282 to which identifier data belongs.

Additionally the row identifier data may be used to associate and/or relate together information (and/or rows) in different tables 282. For example, each row in the Parts table 282a is associated with one or more jobs via the Job IDs column of the Parts table 282a, and the Job ID column of the Jobs table 282b. Likewise, each row of the Jobs table 282b is associated with one or more parts via the Part IDs column of the Jobs table 282b and the Part ID column of the Parts table 282a (though, in some examples, a job may not be associated with a part). And each row of both the Parts table 282a and the Jobs table 282b is associated with one or more positions via the Position IDs columns of the Parts table 282a and the Jobs table 282b, and the Position ID column of the Positions tables 282h.

In this way, the database 280 may organize and/or associate together a substantial amount of information relating to the jobs, parts, and/or activities in which an operator 104 and/or welding-type tool 106 is involved. For example, the database 280 may store data about each operator 104, tool 106, and job using the Operators, Tools, and Jobs tables 282. Further, the database 280 may associate together information about an operator 104 working on a particular job during a particular job session time period with a particular tool 106 with just one row in the Job Sessions table 282c that references the appropriate identifiers of the operator 104, tool 106, and/or job in the Operators, Tools, and Jobs tables 282. Such organization may be useful when later analyzing the data in the database 280 (e.g., for the purposes of productivity, quality assurance, and/or maintenance analysis, as well as future planning).

In the example of FIG. 2a, the computing memory circuitry 206 further includes (and/or stores) a monitoring process 300. In some examples, the monitoring process 300 may comprise machine readable instructions configured for execution by the system computing processing circuitry 208. In some examples, the computing memory circuitry 206 may further include (and/or store) certain parameters and/or thresholds used in the monitoring process 300.

In some examples, the monitoring process 300 may be used to automatically identify the jobs, parts, and/or activities in which an operator 104 and/or tool 106 is involved at any given time, without the need for manual input from the operator 104. More particularly, the monitoring process 300 may monitor and/or detect the position(s) and/or orientation(s) of operators 104 and/or tools 106 using the tracking system 202, and use the tracked positions/orientation of the operators 104 and/or tools 106 (in conjunction with the job, part, and/or activity position stored in the database 282) to automatically identify the jobs, parts, and/or activities in which an operator 104 and/or tool 106 is involved. The monitoring and/or recording of job, part, and/or activity information for each operator 104 may facilitate productivity, quality assurance, and/or maintenance analysis, as well as future planning. The automatic identification of the job, part, and/or activity in which the operator 104 and/or tool 106 is involved also ensures that that the weld monitoring system 100 can still monitor effectively even if operators 104 neglect to provide input regarding their activities.

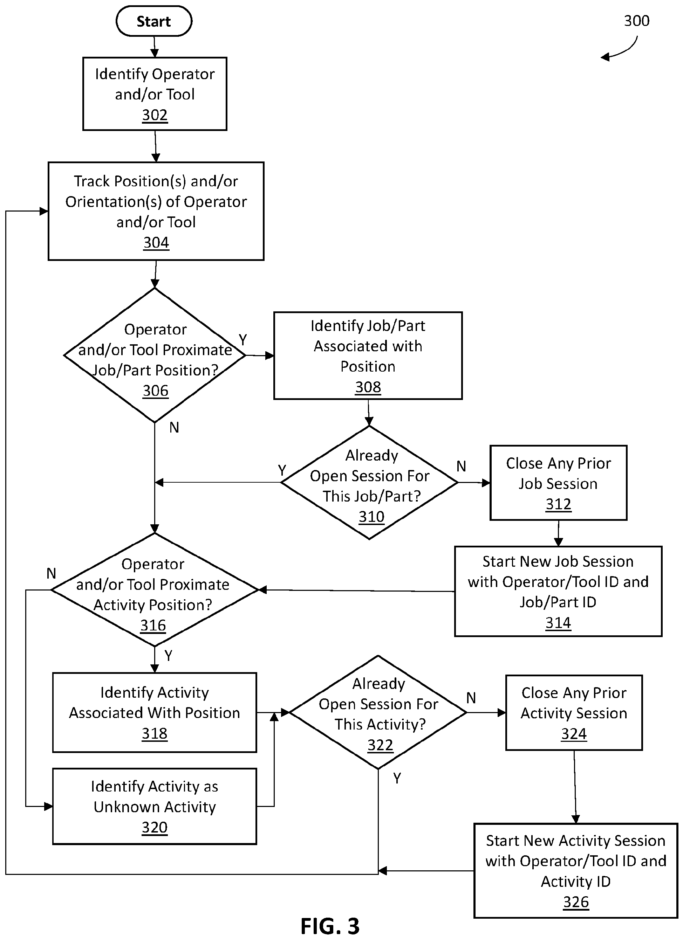

FIG. 3 is a flowchart showing an example operation of the monitoring process 300. While the monitoring process 300 is sometimes discussed below as performing certain actions, this is a shorthand for referring to action taken during the monitoring process 300 by one or more components of the weld monitoring system 100 (e.g., tracking sensors 102, computer processing circuitry 208, computing I/O devices 204, etc.). While shown as one process in the example of FIG. 3, in some examples, multiple instances of the monitoring process 300 may execute simultaneously and/or in parallel.

As shown, the monitoring process 300 begins at block 302, where the monitoring process 300 identifies a particular operator 104 and/or welding-type tool 106 to monitor and/or track. In some examples, this identification may involve identifying the relevant operator identifier and/or tool identifier used to reference information about the particular operator 104 and/or tool 106 in the database 280 (e.g., in the Operators table 282f and/or Tools table 282g).

In some examples, the operator 104 may help with the identification by providing identifying input (e.g., using the computing I/O devices 204). For example, the operator 104 may manually enter identifying information about themselves, their mobile device 199, the tool 106 they are using, and/or the apparel they are wearing (via input using the computing I/O devices 204). As another example, the operator 104 may login with operator credentials that are associated with identifying information via one or more accounts (and/or one or more rows of Operators table 282f). As another example, the operator 104 may have a badge, ID card, mobile device 199, and/or other item that stores identifying information, and the identifying information may be read and/or scanned off the badge, ID card, mobile device 199, and/or other item (e.g., by a tracking sensor 102 of the computing system 200). As another example, the operator 104 may provide biometric information (e.g., read/detected by one or more of the mobile tracking sensors 102b of the helmet 118), and the biometric information may be used as identifying input.

In examples where the operator 104 provides identifying input, the identifying input may be associated in the database 280 with information about the mobile device 199 of the operator 104, the operator 104 worn apparel, and/or the tool 106. For example, in FIG. 2b, the Operators table 282f has Operator Apparel Data associated with each Operator ID, and the Tools table 282g has Tool Marking Data associated with each Tool ID. In some examples, the Other Operator Data of the Operators table 282f may store data pertaining to the mobile device 199. The monitoring process 300 may thereby query the database 280 using the identifying input and obtain the information necessary to identify, recognize, and/or track the operator 104 and/or tool 106.

In some examples, the monitoring process 300 may be able to track the operator 104 and/or the tool 106 without the need for any input from the operator 104. For example, the mobile device 199 and/or the welding helmet 118 (and/or other apparel worn by the operator 104) may be imprinted with (and/or have attached) the operator identifier of the operator 104. As another example, the tool 106 may be imprinted with (and/or have attached) the tool identifier of the tool 106. In such examples, the tracking system 202 may be able to recognize and/or read the operator ID and/or tool ID from the tool 106 and/or (e.g., apparel and/or mobile device 199 of) the operator 104, and thereby recognize which operator 104 and/or tool 106 is being tracked. As another example, the mobile tracking sensors 102b attached to the tool 106, mobile device 199, and/or apparel of the operator 104 may be encoded with the operator ID and/or tool ID, and/or communicate the operator ID and/or tool ID to the fixed tracking sensors 102a during tracking of the tool 106 and/or operator 104.

In the example of FIG. 3, after block 302, the monitoring process 300 next proceeds to block 304, where the monitoring process 300 tracks the position(s) and/or orientation(s) of the tool 106 and/or the operator 104. In some examples, the tracking may be performed by the tracking system 202 and/or computing system 200 of the weld monitoring system 100. In some examples, the tracking may involve the capture of sensor data by the tracking system 202. In some examples, the tracking may involve communications between tracking sensors 102 of the tracking system 202. In some examples, the tracking may involve analysis of the sensor data and/or the communications of the tracking sensors 102. In some examples, the tracking may involve analysis of detected and/or stored positions of certain (e.g., fixed) tracking sensors 102. In some examples, the tracking may involve time of flight, trilateration, triangulation, and/or computer vision analysis. In examples where the tracking fails for some reason (e.g., operator 104 and/or tool 106 no longer in facility 400) the monitoring process 300 may use one or more null values for the position(s) and/or orientation(s).

While, in some examples, monitoring data of the operator 104 might be considered more valuable than data relating to the tool 106, there may be instances in which the operator 104 is not known, and/or is unable to be tracked for some reason. In such examples, it may be helpful to track the tool 106, so at least *some* data may be gathered regarding operations and/or activities in a facility 400, even if the operator 104 performing the operations and/or activities is unknown. In some examples, tracking of the tool 106 may also be important for determining time of use (e.g., for maintenance purposes). In some examples, tracking of the tool 106 may also be helpful when determine in which activity an operator 104 is engaged, especially when there are two or more potential activities from which to choose.

As shown, after block 304, the monitoring process 300 proceeds to block 306 where the monitoring process 300 determines whether the tracked position(s) of the tool 106 and/or the operator 104 are proximate a position of a job and/or part. For example, there may be a welding job that entails manufacturing a part (e.g., comprised of two or more workpieces 126). And welding-type operations relating to that job (and/or part manufacture) may be slated to occur in certain welding areas 198 (e.g., having certain workpieces 126 and/or proximate certain equipment 150). In some such examples, the database 280 may store identifiers of the job and/or part associated with one or more positions in and/or near the appropriate welding area(s).

In the example database 280 shown in FIG. 2b, the Positions table 282h is designed to store one or more thresholds associated with each position. A position combined with a threshold may define a sphere having a center at the position and a radius defined by the threshold. Thus, at block 306, the monitoring process 300 may determine whether the tracked position(s) of the tool 106 and/or operator 104 are within one or more spheres defined by one or more positions and/or thresholds associated with a job/part stored in the database 280.

In some examples, a position combined with a threshold may instead define an infinite and/or unbounded cylinder. For example, the finite threshold(s) may only be applied to two coordinate axis, and an infinite threshold may be applied to the third (e.g., height) coordinate axis. Alternatively, some other threshold(s) may be applied to define a shape that is bounded in one (e.g., height) coordinate axis at, near, or above/below the ceiling/floor. This may prevent an operator 104 and/or tool 106 from being determined not to be proximate a position because the position of the operator 104 and/or tool 106 is too high/low (e.g., close to a ceiling/floor of the facility 400).

In some examples, a position may be associated with two or more thresholds. In some such examples, overlapping spheres and/or cylinders may be defined. In some such examples, the positions where the spheres and/or cylinders do not overlap may be considered outer boundary positions, where orientation(s) of the tool 106 and/or operator 104 is also considered when determining position proximity at block 306. For example, a tool 106 and/or operator 104 may not be considered proximate a position at block 306 if the tool 106 and/or operator 104 is positioned at an outer boundary position and the orientation of the tool 106 and/or operator 104 is not oriented towards the position (e.g., within some other threshold associate with the position). In some examples, the vertical component of the orientation may be disregarded similar to what is discussed above to avoid too high/low situations.

In some examples, the monitoring process 300 may use a different procedure (e.g., rather than relying on thresholds) for determining whether the tracked position(s) of the tool 106 and/or the operator 104 are proximate a position of a job and/or part at block 306. For example, the monitoring process 300 might identify which stored position (e.g., of a job and/or part) is closest to the tracked position(s) of the tool 106 and/or the operator 104, and identify the tool 106 and/or the operator 104 as being proximate that stored position. As another example, the monitoring process 300 may make use of one or more artificial intelligence and/or machine learning techniques to make a determination as to whether the tracked position(s) of the tool 106 and/or the operator 104 are proximate a position of a job and/or part at block 306.

FIG. 4 is a diagram showing an example facility 400 having numerous welding areas 198 at different positions within the facility 400. As shown, some welding areas 198 differ from others, be it with respect to the proximity of welding-type equipment 150, the type of workpieces 126, the type of workbench 114 (e.g., with or without a robot), and/or other aspects. The difference in welding areas 198 may impact whether certain welding areas 198 are or are not used for certain jobs/parts. The tracking sensors 102 around the facility 400 may allow the weld monitoring system 100 to track positions and/or orientations of operators 104 and/or tools 106 in the facility 400, and/or determine whether those positions correspond to a job/part position (and/or the position of an associated welding area 198). In some examples, the welding areas 198 may be spaced (and/or the positions and/or thresholds in the database 280 configured) such that an operator 104 and/or tool 106 will never be determined to be proximate two different job/part positions (and/or two different welding areas 198).

If the monitoring process 300 determines the tool 106 and/or operator 104 is proximate a job/part position at block 306, the monitoring process 300 proceeds to block 308 where the relevant job and/or part is identified. This identification may involve analysis of the associations of job/part identifiers and positions (and/or position identifiers) in the database 280. In some examples, the monitoring process 300 may prompt the operator 104 (e.g., via the computing I/O devices 204) to confirm the identified job/part is correct. To the extent the operator 104 indicates the identification is incorrect, an error may be output, and/or the monitoring process 300 may return to block 304 (or proceed to block 316).

In some examples, the monitoring process 300 may provide a list of the closest identified jobs/parts (e.g., ordered according to proximity, selection/identification frequency, perceived likelihood, etc.). For example, there may be a conflict where the tracked position of the tool 106 and/or the operator 104 is within a threshold distance of two or more stored positions. In some examples, the monitoring process 300 may prompt the operator 104 to select the correct job/part from the provided list of jobs/parts. In some examples, the monitoring process 300 may automatically select a job/part (e.g., according to proximity, selection frequency, perceived likelihood, etc.) if the operator 104 neglects to make a selection (e.g., after some threshold time limit).

After the job/part identification at block 308, the monitoring process proceeds to block 310 where the monitoring process 300 determines whether there is already an open job session associated with the operator 104 and/or tool 106 for the identified job/part. If not, the monitoring process 300 closes any open (e.g., with no closed timestamp data) job session associated with the operator 104 and/or tool 106 at block 312 (e.g., by entering closed timestamp data corresponding to the current time for that particular job session).

Afterwards, at block 314, the monitoring process 300 opens a new job session for the identified job/part and the operator 104 and/or tool 106, such as, for example, by adding a new row to the Job Sessions table 282c with the appropriate data for the open timestamp, job ID, part ID, operator ID, tool ID, position ID(s), and/or other columns of the Job Session table 282. In some examples, the monitoring process 300 may use different times (e.g., offset by one or more second/milliseconds) for the open and closed timestamps, so that they are not exactly the same. In this way the weld monitoring system 100 may automatically identify and/or record the j ob/part on which an operator 104 and/or tool 106 is working, and associate the operator 104 and/or tool 106 with the job/part, as well as other relevant data.

In some examples, the monitoring process 300 may record and/or associate other relevant data as part of the new job session at block 314. For example, the identified welding job/part and/or position(s) may be associated with particular welding-type equipment 150 and/or other welding-type devices 250, and identifiers of the equipment 150 and/or devices 250 may be recorded at block 314. In some examples, data regarding operation of the equipment 150 and/or devices 250 may additionally, or alternatively, be recorded.

In some examples, the weld monitoring process 300 may identify a particular tool 106 associated with the identified job, part, and/or position that is different than the previously identified tool 106 at block 304. For example, the job, part, and/or welding area 198 may call for (and/or only be approved for) work with a robotically controlled tool 106. In such examples, the weld monitoring process 300 may associate data relating to that different tool 106 with the new job session at block 314, rather than data relating to the previously identified tool 106. In some examples, the weld monitoring process 300 may only do this if the operator 104 confirms this is correct when prompted (e.g., via the computing I/O devices 204).

In the example of FIG. 3, the monitoring process 300 proceeds to block 316 after block 314. The weld monitoring process 300 also proceeds to block 316 if the operator 104 and/or tool 106 is not found to be proximate a known job/part position at block 306, or there is determined already to be an open job session for the identified job/part at block 310.

At block 316, the monitoring process 300 determines whether the tracked position(s) of the tool 106 and/or the operator 104 are proximate a position of a stored operator activity (e.g., similar to that which is discussed above with respect to block 306). For example, a welding-type operation activity may be associated with one or more positions within a welding area 198 (and/or one or more positions within a different welding area 198). As another example, positions outside the welding area 198, within other non-welding areas 498, and/or within welding-related areas 499 may be associated with other (e.g., non-welding and/or welding-related) activities.

Such non-welding activities might include, for example, break activities, bathroom activities, shift end activities, cleanup activities, maintenance activities, resupply activities, and/or other activities that might take place in a facility 400. Welding related activities might include, for example, a resupply activity or a maintenance activity.

For example, an operator 104 may need to replenish a supply of workpieces 126, welding wire, shielding gas, or other items necessary for welding, and thereby be identified as involved a resupply activity when proximate one or more resupply cabinets. As another example, an operator 104 may need to clean off the welding tool 106, or replace a tip or nozzle of the tool 106, and thereby be identified as involved in a maintenance activity when proximate one or more maintenance areas. As another example, an operator 104 may need to clock out of their shift, use the bathroom, go to the locker room, throw away some trash, grab a cup of coffee, or get something to eat (e.g., from the lunchroom and/or or vending machine), and thereby be identified as involved in a shift change, cleanup, or (e.g., coffee, bathroom, or snack/lunch) break activity when proximate one or more entrances/exits, punch clocks, bathrooms, trash receptacles, coffee machines, vending machines, or lunchrooms.

In some such examples, the database 280 may associate one or more positions in and/or near the non-welding areas 498 and/or welding-related areas 499 with one or more activities. The database 280 may further store one or more thresholds related to each position, as discussed above. In some examples, the thresholds may only be applied to certain axes, as discussed above. In some examples, thresholds may not be used at all, as discussed above. Furthermore, in some examples, orientation may be relevant at certain positions, as discussed above. Thus, at block 316, the monitoring process 300 may determine whether the tracked position(s) of the tool 106 and/or operator 104 are proximate one or more of the activity positions stored in the database 280 (e.g., similar to that which is discussed above with respect to block 306).

In the example of FIG. 4, several non-welding areas 498 and welding-related areas 499 are shown in the facility 400. The non-welding areas 498 and welding-related areas 499 are shown in different positions, spaced from both each other and the welding areas 198. In some examples, the welding areas 198, non-welding areas 498, welding-related areas 499, may be spaced, and/or the positions and/or thresholds in the database 280 configured, such that an operator 104 and/or tool 106 will never be determined to be proximate two different activity positions.

If the monitoring process 300 determines the tool 106 and/or operator 104 is proximate an activity position at block 316, the monitoring process 300 proceeds to block 318 where the activity job is identified. This identification may involve analysis of the associations of activities and positions in the database 280.

In some examples, the activity identification at block 318 may further involve analysis of associations between activities and different types of tools 106 and/or operators 104. In some examples, the activity description of a certain activity may define the activity as specific to a certain type of tool 106 and/or operator 104. For example, inspection activities may be specific to administrative operators 104, while grinding activities may be specific to grinding tools 106. In some examples, certain activities may overlap in position, and such analysis of associations between activities and different types of tools 106 and/or operators 104 may be useful in identifying the most likely activity.

In some examples, the activity identification at block 318 may involve analysis of the position(s) and/or orientation(s) of both the operator 104 and the tool 106. For example, the presence of an operator 104 at a resupply bin and/or maintenance area may be identified as an inspection (e.g., regardless of the type of operator 104) if the tool 106 is not also with the operator 104 at the resupply bin and/or maintenance area.

In some examples, the monitoring process 300 may prompt the operator 104 (e.g., via the computing I/O devices 204) to confirm the identified activity is correct (e.g., similar to that which is discussed above). In some examples the monitoring process 300 may present a list of activities identified as potentially relevant (e.g., ordered according to proximity, frequency, perceived likelihood, etc.).

In some examples, the monitoring process 300 may automatically select an activity (e.g., according to proximity, selection frequency, perceived likelihood, etc.) in the absence of input from the operator 104 (e.g., after some threshold time limit). To the extent the operator 104 indicates the identification is incorrect, an error may be output, and/or the monitoring process 300 may identify the activity as an unknown activity at block 320. The monitoring process 300 may also identify the present activity as an unknown activity at block 320 if the monitoring process 300 determines the tool 106 and/or operator 104 is *not* proximate an activity position at block 316, and/or in the absence of input from the operator 104 (e.g., after some threshold time limit).

At block 322, the monitoring process 300 determines whether there is already an open activity session for the identified activity that is associated with the operator 104 and/or tool 106. If not, the monitoring process 300 closes any open (e.g., with no closed timestamp data) activity session associated with the operator 104 and/or tool 106 at block 324 (e.g., by entering closed timestamp data corresponding to the current time for that particular activity session). Then the monitoring process 300 opens a new activity session for the identified activity and the operator 104 and/or tool 106 at block 326, such as, for example, by adding a new row to the Activity Sessions table 282e with the appropriate data for the open timestamp, activity ID, operator ID, tool ID, position ID(s), and/or other columns of the Activity Session table 282. To the extent a job session is also open, the monitoring process 300 may enter the job ID, and/or update the Job Sessions table 282c to include the appropriate activity ID in the row of the open job session. In some examples, the monitoring process 300 may close an open job session at block 326 (e.g., if the identified activity is a facility exit and/or shift end activity). In this way the weld monitoring system 100 may automatically identify and/or record the activity in which an operator 104 and/or tool 106 is engaged, and associate the operator 104 and/or tool 106 with the activity, as well as other relevant data.

The disclosed weld monitoring system 100 can use its tracking system 202 and computing system 200 to automatically identify a job, part, and/or activity in which an operator 104 and/or tool 106 is involved. The monitoring and/or recording of job, part, and/or activity information for each operator 104 and/or tool 106 may facilitate productivity, quality assurance, and/or maintenance analysis, as well as future planning. The automatic identification of the job, part, and/or activity in which the operator 104 and/or tool 106 is involved also ensures that that the weld monitoring system can still monitor effectively even if operators 104 neglect to provide input regarding their activities.

The present methods and/or systems may be realized in hardware, software, or a combination of hardware and software. The present methods and/or systems may be realized in a centralized fashion in at least one computing system, or in a distributed fashion where different elements are spread across several interconnected computing or cloud systems. Any kind of computing system or other apparatus adapted for carrying out the methods described herein is suited. A typical combination of hardware and software may be a general-purpose computing system with a program or other code that, when being loaded and executed, controls the computing system such that it carries out the methods described herein. Another typical implementation may comprise an application specific integrated circuit or chip. Some implementations may comprise a non-transitory machine-readable (e.g., computer readable) medium (e.g., FLASH drive, optical disk, magnetic storage disk, or the like) having stored thereon one or more lines of code executable by a machine, thereby causing the machine to perform processes as described herein.

While the present method and/or system has been described with reference to certain implementations, it will be understood by those skilled in the art that various changes may be made and equivalents may be substituted without departing from the scope of the present method and/or system. In addition, many modifications may be made to adapt a particular situation or material to the teachings of the present disclosure without departing from its scope. Therefore, it is intended that the present method and/or system not be limited to the particular implementations disclosed, but that the present method and/or system will include all implementations falling within the scope of the appended claims.

As used herein, "and/or" means any one or more of the items in the list joined by "and/or". As an example, "x and/or y" means any element of the three-element set {(x), (y), (x, y)}. In other words, "x and/or y" means "one or both of x and y". As another example, "x, y, and/or z" means any element of the seven-element set {(x), (y), (z), (x, y), (x, z), (y, z), (x, y, z)}. In other words, "x, y, and/or z" means "one or more of x, y, and z".

As utilized herein, the terms "e.g.," and "for example" set off lists of one or more non-limiting examples, instances, or illustrations.

As used herein, the terms "coupled," "coupled to," and "coupled with," each mean a structural and/or electrical connection, whether attached, affixed, connected, joined, fastened, linked, and/or otherwise secured. As used herein, the term "attach" means to affix, couple, connect, join, fasten, link, and/or otherwise secure. As used herein, the term "connect" means to attach, affix, couple, join, fasten, link, and/or otherwise secure.

As used herein the terms "circuits" and "circuitry" refer to physical electronic components (i.e., hardware) and any software and/or firmware ("code") which may configure the hardware, be executed by the hardware, and or otherwise be associated with the hardware. As used herein, for example, a particular processor and memory may comprise a first "circuit" when executing a first one or more lines of code and may comprise a second "circuit" when executing a second one or more lines of code. As utilized herein, circuitry is "operable" and/or "configured" to perform a function whenever the circuitry comprises the necessary hardware and/or code (if any is necessary) to perform the function, regardless of whether performance of the function is disabled or enabled (e.g., by a user-configurable setting, factory trim, etc.).

As used herein, a control circuit may include digital and/or analog circuitry, discrete and/or integrated circuitry, microprocessors, DSPs, etc., software, hardware and/or firmware, located on one or more boards, that form part or all of a controller, and/or are used to control a welding process, and/or a device such as a power source or wire feeder.

As used herein, the term "processor" means processing devices, apparatus, programs, circuits, components, systems, and subsystems, whether implemented in hardware, tangibly embodied software, or both, and whether or not it is programmable. The term "processor" as used herein includes, but is not limited to, one or more computing devices, hardwired circuits, signal-modifying devices and systems, devices and machines for controlling systems, central processing units, programmable devices and systems, field-programmable gate arrays, application-specific integrated circuits, systems on a chip, systems comprising discrete elements and/or circuits, state machines, virtual machines, data processors, processing facilities, and combinations of any of the foregoing. The processor may be, for example, any type of general purpose microprocessor or microcontroller, a digital signal processing (DSP) processor, an application-specific integrated circuit (ASIC), a graphic processing unit (GPU), a reduced instruction set computer (RISC) processor with an advanced RISC machine (ARM) core, etc. The processor may be coupled to, and/or integrated with a memory device.

As used, herein, the term "memory" and/or "memory device" means computer hardware or circuitry to store information for use by a processor and/or other digital device. The memory and/or memory device can be any suitable type of computer memory or any other type of electronic storage medium, such as, for example, read-only memory (ROM), random access memory (RAM), cache memory, compact disc read-only memory (CDROM), electro-optical memory, magneto-optical memory, programmable read-only memory (PROM), erasable programmable read-only memory (EPROM), electrically-erasable programmable read-only memory (EEPROM), a computer-readable medium, or the like. Memory can include, for example, a non-transitory memory, a non-transitory processor readable medium, a non-transitory computer readable medium, non-volatile memory, dynamic RAM (DRAM), volatile memory, ferroelectric RAM (FRAM), first-in-first-out (FIFO) memory, last-in-first-out (LIFO) memory, stack memory, non-volatile RAM (NVRAM), static RAM (SRAM), a cache, a buffer, a semiconductor memory, a magnetic memory, an optical memory, a flash memory, a flash card, a compact flash card, memory cards, secure digital memory cards, a microcard, a minicard, an expansion card, a smart card, a memory stick, a multimedia card, a picture card, flash storage, a subscriber identity module (SIM) card, a hard drive (HDD), a solid state drive (SSD), etc. The memory can be configured to store code, instructions, applications, software, firmware and/or data, and may be external, internal, or both with respect to the processor.

The term "power" is used throughout this specification for convenience, but also includes related measures such as energy, current, voltage, and enthalpy. For example, controlling "power" may involve controlling voltage, current, energy, and/or enthalpy, and/or controlling based on "power" may involve controlling based on voltage, current, energy, and/or enthalpy.

As used herein, welding-type refers to welding (including laser welding and/or hot wire welding), cladding (including laser cladding), brazing, plasma cutting, induction heating, carbon arc cutting or gouging, hot wire preheating, and/or resistive preheating.

As used herein, a welding-type tool refers to a tool suitable for and/or capable of welding (including laser welding and/or hot wire welding), cladding (including laser cladding), brazing, plasma cutting, induction heating, carbon arc cutting or gouging, hot wire preheating, and/or resistive preheating.

As used herein, welding-type power refers to power suitable for welding (including laser welding and/or hot wire welding), cladding (including laser cladding), brazing, plasma cutting, induction heating, carbon arc cutting or gouging, hot wire preheating, and/or resistive preheating.

As used herein, a welding-type power supply and/or welding-type power source refers to a device capable of, when input power is applied thereto, supplying output power suitable for welding (including laser welding and/or hot wire welding), cladding (including laser cladding), brazing, plasma cutting, induction heating, carbon arc cutting or gouging, hot wire preheating, and/or resistive preheating; including but not limited to transformer-rectifiers, inverters, converters, resonant power supplies, quasi-resonant power supplies, switch-mode power supplies, etc., as well as control circuitry and other ancillary circuitry associated therewith.
Certain embodiments of the invention are described in the following clauses:
Clause 1. A welding system, comprising:
   a tracking system configured to track one or more of a tool position of a welding-type tool or an operator position of a welding operator handling the welding-type tool;
   memory circuitry configured to store:
      a plurality of welding job identifiers, or a plurality of part identifiers,
      a plurality of stored positions, and
      an association between each welding job identifier of the plurality of welding job identifiers, or each part identifier of the plurality of part identifiers, and a stored position of the plurality of stored positions; and
   processing circuitry configured to:
      determine whether the tool position or the operator position is proximate a particular position of the plurality of positions,
      in response to determining the tool position or the operator position is proximate the particular stored position, identify a particular welding job identifier from the plurality of welding job identifiers, or a particular part identifier from the plurality of part identifiers, that is associated with the stored position, and
      associate, in memory circuitry, the particular welding job identifier, or the particular part identifier, with an operator identifier of the operator or a tool identifier of the welding-type tool.
Clause 2. The welding system of clause 1, wherein the association comprises a position association, the memory circuitry being further configured to store a part-job association between each part identifier of the plurality of part identifiers and at least one welding job identifier of the plurality of the welding job identifiers.
Clause 3. The welding system of clause 1, wherein the processing circuitry is configured to determine whether the tool position or the operator position is proximate the particular position by determining whether the tool position or the operator position is within a threshold distance of the particular position, or determining whether the tool position or the operator position is closer to the particular position than any other position of the plurality of positions.
Clause 4. The welding system of clause 1, wherein the tracking system is configured to track the operator by tracking a mobile device of the operator or a piece of wearable apparel worn by the operator, the piece of wearable apparel comprising a bracelet, an armband, a wristband, footwear, legwear, headwear, a glove, a shirt, a vest, a welding helmet, an earbud, or a badge.
Clause 5. The welding system of clause 1, wherein the tracking system comprises one or more camera, optical, magnetic, ultrasonic, acoustic, global positioning system (GPS), radio frequency identification (RFID), near field communication (NFC), or Bluetooth sensors.
Clause 6. The welding system of clause 1, wherein at least one welding job identifier of the plurality of welding job identifiers, or at least one part identifier of the plurality of part identifiers, is associated with two or more stored positions of the plurality of stored positions.
Clause 7. The welding system of clause 1, wherein the association comprises a job-position or a part-position association,
   the memory circuitry being further configured to store:
      a plurality of operator activity identifiers, and
      an activity-position association between each stored position of the plurality of stored positions and an operator activity identifier of the plurality of operator activity identifiers,
   the processing circuitry being further configured to
      in response to determining the tool position or the operator position is proximate the particular stored position, identify, from the plurality of operator activity identifiers, a particular operator activity identifier associated with the particular stored position, and
      associate together, in the memory circuitry, the operator activity identifier and the operator identifier of the operator or the tool identifier of the welding-type tool.
Clause 8. A welding system, comprising:
   a tracking system configured to track a tool position of a welding-type tool or an operator position of a welding operator;
   memory circuitry configured to store:
      a plurality of stored positions within a facility,
      a plurality of operator activity identifiers, and
      an association between each stored position of the plurality of stored positions and an operator activity identifier of the plurality of operator activity identifiers; and
   processing circuitry configured to:
      determine whether the tool position or the operator position is proximate a particular stored position of the plurality of stored positions,
      in response to determining the tool position or the operator position is proximate the particular stored position, identify, from the plurality of operator activity identifiers, a particular operator activity identifier associated with the particular stored position, and
      associate together, in the memory circuitry, the operator activity identifier and the operator identifier of the operator or the tool identifier of the welding-type tool.
Clause 9. The welding system of clause 8, wherein at least one operator activity identifier of the plurality of operator activity identifiers is associated with two or more stored positions of the plurality of stored positions.
Clause 10. The welding system of clause 8, wherein the welding-type tool comprises a welding tool, a cladding tool, a brazing tool, a plasma cutting tool, an induction heating tool, carbon arc cutting tool, a gouging tool, or a preheating tool.
Clause 11. The welding system of clause 8, wherein the tracking system is configured to track the operator by tracking a mobile device of the operator or a piece of wearable apparel worn by the operator.
Clause 12. The welding system of clause 11, wherein the piece of wearable apparel comprises a bracelet, an armband, a wristband, footwear, legwear, headwear, a glove, a shirt, a vest, a welding helmet, an earbud, or a badge.
Clause 13. The welding system of clause 8, wherein the tracking system comprises one or more camera, optical, magnetic, ultrasonic, acoustic, global positioning system (GPS), radio frequency identification (RFID), near field communication (NFC), or Bluetooth sensors.
Clause 14. The welding system of clause 8, wherein the association comprises an activity-position association,
   the memory circuitry being further configured to store:
      a plurality of welding job identifiers, or a plurality of part identifiers, and
      a job-position association between each welding job identifier of the plurality of welding job identifiers, or a part-position association between each part identifier of the plurality of part identifiers, and a stored position of the plurality of stored positions,
   the processing circuitry being further configured to
      in response to determining the tool position or the operator position is proximate the particular stored position, identify a particular job identifier from the plurality of welding job identifiers, or a particular part identifier from the plurality of part identifiers, that is associated with the particular stored position, and
      associate together, in the memory circuitry, the particular job identifier, or the particular part identifier, and an operator identifier of the operator or a tool identifier of the welding-type tool.
Clause 15. A weld monitoring method, comprising:
   tracking, via a tracking system, one or more of a tool position of a welding-type tool or an operator position of a welding operator handling the welding-type tool;
   storing, in memory circuitry:
      a plurality of welding job identifiers, or a plurality of part identifiers, a plurality of stored positions, and
      an association between each welding job identifier of the plurality of welding job identifiers, or each part identifier of the plurality of part identifiers, and a stored position of the plurality of stored positions;
   determining, via processing circuitry, whether the tool position or the operator position is proximate a particular position of the plurality of positions;
   in response to determining the tool position or the operator position is proximate the particular stored position, identifying, via the processing circuitry, a particular welding job identifier from the plurality of welding job identifiers, or a particular part identifier from the plurality of part identifiers, that is associated with the stored position; and
   associating, in the memory circuitry, the particular welding job identifier, or the particular part identifier, with an operator identifier of the operator or a tool identifier of the welding-type tool
Clause 16. The weld monitoring method of clause 15, wherein the association comprises a position association, the method further comprising storing in the memory circuitry a part-job association between each welding job identifier of the plurality of the welding job identifiers and at least one part identifier of the plurality of part identifiers.
Clause 17. The weld monitoring method of clause 15, wherein tracking the operator position comprises tracking the operator by tracking a mobile device of the operator or a piece of wearable apparel worn by the operator.
Clause 18. The weld monitoring method of clause 17, wherein the piece of wearable apparel comprises a bracelet, an armband, a wristband, footwear, legwear, headwear, a glove, a shirt, a vest, a welding helmet, an earbud, or a badge.
Clause 19. The weld monitoring method of clause 15, wherein the tracking system comprises one or more camera, optical, magnetic, ultrasonic, acoustic, global positioning system (GPS), radio frequency identification (RFID), near field communication (NFC), or Bluetooth sensors.
Clause 20. The weld monitoring method of clause 15, wherein the association comprises a job-position or a part-position association, the method further comprising:
   storing, in the memory circuitry:
      a plurality of operator activity identifiers, and
      an activity-position association between each stored position of the plurality of stored positions and an operator activity identifier of the plurality of operator activity identifiers;
   in response to determining the tool position or the operator position is proximate the particular stored position, identifying via processing circuitry, from the plurality of operator activity identifiers, a particular operator activity identifier associated with the particular stored position; and
   associating together, in the memory circuitry, the operator activity identifier and the operator identifier of the operator or the tool identifier of the welding-type tool.

## Claims

1. A welding system, comprising:
a tracking system configured to track one or more of a tool position of a welding-type tool or an operator position of a welding operator handling the welding-type tool;
memory circuitry configured to store:
a plurality of welding job identifiers, or a plurality of part identifiers,
a plurality of stored positions, and
an association between each welding job identifier of the plurality of welding job identifiers, or each part identifier of the plurality of part identifiers, and a stored position of the plurality of stored positions; and
processing circuitry configured to:
determine whether the tool position or the operator position is proximate a particular position of the plurality of positions,
in response to determining the tool position or the operator position is proximate the particular stored position, identify a particular welding job identifier from the plurality of welding job identifiers, or a particular part identifier from the plurality of part identifiers, that is associated with the stored position, and
associate, in memory circuitry, the particular welding job identifier, or the particular part identifier, with an operator identifier of the operator or a tool identifier of the welding-type tool.

2. The welding system of claim 1, wherein the association comprises a position association, the memory circuitry being further configured to store a part-job association between each part identifier of the plurality of part identifiers and at least one welding job identifier of the plurality of the welding job identifiers.

3. The welding system of claim 1, wherein the processing circuitry is configured to determine whether the tool position or the operator position is proximate the particular position by determining whether the tool position or the operator position is within a threshold distance of the particular position, or determining whether the tool position or the operator position is closer to the particular position than any other position of the plurality of positions, or
wherein the tracking system is configured to track the operator by tracking a mobile device of the operator or a piece of wearable apparel worn by the operator, the piece of wearable apparel comprising a bracelet, an armband, a wristband, footwear, legwear, headwear, a glove, a shirt, a vest, a welding helmet, an earbud, or a badge.

4. The welding system of claim 1, wherein the tracking system comprises one or more camera, optical, magnetic, ultrasonic, acoustic, global positioning system (GPS), radio frequency identification (RFID), near field communication (NFC), or Bluetooth sensors, or
wherein at least one welding job identifier of the plurality of welding job identifiers, or at least one part identifier of the plurality of part identifiers, is associated with two or more stored positions of the plurality of stored positions.

5. The welding system of claim 1, wherein the association comprises a job-position or a part-position association,
the memory circuitry being further configured to store:
a plurality of operator activity identifiers, and
an activity-position association between each stored position of the plurality of stored positions and an operator activity identifier of the plurality of operator activity identifiers,
the processing circuitry being further configured to
in response to determining the tool position or the operator position is proximate the particular stored position, identify, from the plurality of operator activity identifiers, a particular operator activity identifier associated with the particular stored position, and
associate together, in the memory circuitry, the operator activity identifier and the operator identifier of the operator or the tool identifier of the welding-type tool.

6. A welding system, comprising:
a tracking system configured to track a tool position of a welding-type tool or an operator position of a welding operator;
memory circuitry configured to store:
a plurality of stored positions within a facility,
a plurality of operator activity identifiers, and
an association between each stored position of the plurality of stored positions and an operator activity identifier of the plurality of operator activity identifiers; and
processing circuitry configured to:
determine whether the tool position or the operator position is proximate a particular stored position of the plurality of stored positions,
in response to determining the tool position or the operator position is proximate the particular stored position, identify, from the plurality of operator activity identifiers, a particular operator activity identifier associated with the particular stored position, and
associate together, in the memory circuitry, the operator activity identifier and the operator identifier of the operator or the tool identifier of the welding-type tool.

7. The welding system of claim 6, wherein at least one operator activity identifier of the plurality of operator activity identifiers is associated with two or more stored positions of the plurality of stored positions, or
wherein the welding-type tool comprises a welding tool, a cladding tool, a brazing tool, a plasma cutting tool, an induction heating tool, carbon arc cutting tool, a gouging tool, or a preheating tool.

8. The welding system of claim 6, wherein the tracking system is configured to track the operator by tracking a mobile device of the operator or a piece of wearable apparel worn by the operator, and optionally
wherein the piece of wearable apparel comprises a bracelet, an armband, a wristband, footwear, legwear, headwear, a glove, a shirt, a vest, a welding helmet, an earbud, or a badge.

9. The welding system of claim 6, wherein the tracking system comprises one or more camera, optical, magnetic, ultrasonic, acoustic, global positioning system (GPS), radio frequency identification (RFID), near field communication (NFC), or Bluetooth sensors.

10. The welding system of claim 6, wherein the association comprises an activity-position association,
the memory circuitry being further configured to store:
a plurality of welding job identifiers, or a plurality of part identifiers, and
a job-position association between each welding job identifier of the plurality of welding job identifiers, or a part-position association between each part identifier of the plurality of part identifiers, and a stored position of the plurality of stored positions,
the processing circuitry being further configured to
in response to determining the tool position or the operator position is proximate the particular stored position, identify a particular job identifier from the plurality of welding job identifiers, or a particular part identifier from the plurality of part identifiers, that is associated with the particular stored position, and
associate together, in the memory circuitry, the particular job identifier, or the particular part identifier, and an operator identifier of the operator or a tool identifier of the welding-type tool.

11. A weld monitoring method, comprising:
tracking, via a tracking system, one or more of a tool position of a welding-type tool or an operator position of a welding operator handling the welding-type tool;
storing, in memory circuitry:
a plurality of welding job identifiers, or a plurality of part identifiers, a plurality of stored positions, and
an association between each welding job identifier of the plurality of welding job identifiers, or each part identifier of the plurality of part identifiers, and a stored position of the plurality of stored positions;
determining, via processing circuitry, whether the tool position or the operator position is proximate a particular position of the plurality of positions;
in response to determining the tool position or the operator position is proximate the particular stored position, identifying, via the processing circuitry, a particular welding job identifier from the plurality of welding job identifiers, or a particular part identifier from the plurality of part identifiers, that is associated with the stored position; and
associating, in the memory circuitry, the particular welding job identifier, or the particular part identifier, with an operator identifier of the operator or a tool identifier of the welding-type tool

12. The weld monitoring method of claim 11, wherein the association comprises a position association, the method further comprising storing in the memory circuitry a part-job association between each welding job identifier of the plurality of the welding job identifiers and at least one part identifier of the plurality of part identifiers.

13. The weld monitoring method of claim 11, wherein tracking the operator position comprises tracking the operator by tracking a mobile device of the operator or a piece of wearable apparel worn by the operator, and optionally
wherein the piece of wearable apparel comprises a bracelet, an armband, a wristband, footwear, legwear, headwear, a glove, a shirt, a vest, a welding helmet, an earbud, or a badge.

14. The weld monitoring method of claim 11, wherein the tracking system comprises one or more camera, optical, magnetic, ultrasonic, acoustic, global positioning system (GPS), radio frequency identification (RFID), near field communication (NFC), or Bluetooth sensors.

15. The weld monitoring method of claim 11, wherein the association comprises a job-position or a part-position association, the method further comprising:
storing, in the memory circuitry:
a plurality of operator activity identifiers, and
an activity-position association between each stored position of the plurality of stored positions and an operator activity identifier of the plurality of operator activity identifiers;
in response to determining the tool position or the operator position is proximate the particular stored position, identifying via processing circuitry, from the plurality of operator activity identifiers, a particular operator activity identifier associated with the particular stored position; and
associating together, in the memory circuitry, the operator activity identifier and the operator identifier of the operator or the tool identifier of the welding-type tool.
